Europäisches Patentamt

European Patent Office

Office européen des brevets

(19)

(11) **EP 0 621 121 B1**

(12) **EUROPÄISCHE PATENTSCHRIFT**

(45) Veröffentlichungstag und Bekanntmachung des Hinweises auf die Patenterteilung:
**26.05.1999 Patentblatt 1999/21**

(51) Int. Cl.⁶: $B29C\ 61/06$, $B29C\ 35/02$
// $C08L23/04$, $B29K23/00$,
$B29K105/24$

(21) Anmeldenummer: **94103846.5**

(22) Anmeldetag: **12.03.1994**

(54) **Verfahren zur Verminderung der Rissanfälligkeit bei einer wärmerückstellbaren Werkstoffbahn**

Process for reducing the tearability of a thermally shrinkable web

Procédé pour la réduction de la tendance à la déchirure d'une bande thermorétractable

(84) Benannte Vertragsstaaten:
**AT BE DE ES FR GB IT LU NL**

(30) Priorität: **22.04.1993 DE 4313153**
**22.04.1993 DE 4343166**
**26.02.1994 DE 4406406**

(43) Veröffentlichungstag der Anmeldung:
**26.10.1994 Patentblatt 1994/43**

(73) Patentinhaber:
**KRONE Aktiengesellschaft**
**14167 Berlin (DE)**

(72) Erfinder:
• **Nicolai, Norbert, Dr.**
**D-46282 Dorsten (DE)**
• **Koppe, Heinz**
**D-44579 Castrop-Rauxel (DE)**
• **Schwabe, Thomas**
**D-46284 Dorsten (DE)**
• **Vogel, Jürgen, Dr.**
**D-06237 Leuna (DE)**

(56) Entgegenhaltungen:
**EP-A- 0 172 645          EP-A- 0 426 257**
**DE-A- 1 914 455          DE-A- 3 428 946**
**DE-A- 3 528 066          GB-A- 2 019 412**

• **DATABASE WPI Week 7944, Derwent Publications Ltd., London, GB; AN 79-79651B & JP-A-54 120 679 (SUMITOMO BAKELITE) 19. September 1979**

# Beschreibung

Die Erfindung betrifft ein Verfahren zur Verminderung der Rißanfälligkeit einer wärmerückstellbaren Werkstoffbahn zum Herstellen einer insbesondere auf Kabelverbindungen und/oder Kabelabzweigungen aufschrumpfbaren Umhüllung aus einer aus einem vernetzbaren Polymer bestehenden Kunststoffbahn, wonach die Kunststoffbahn durch Extrusion hergestellt, vernetzt, unter Erwärmung verstreckt und abschließend in verstrecktem Zustand abgekühlt wird.

Bei gattungsgemäßen Verfahren, wie sie z. B. aus der DE-OS 38 06 660 bekannt sind, besteht ein ständiges Problem darin, die Reißfestigkeit einer wärmerückstellbaren Manschette bzw. Werkstoffbahn zu erhöhen. Dazu besteht die wärmerückstellbare Manschette aus einem Band eines vernetzten Polymers, dessen eine Oberfläche eine durch Koextrusion erzeugte Beschichtung aus einem thermoplastischen Polymer aufweist, auf welche eine Schicht aus einem ebenfalls thermoplastischen Polymer aufkaschiert ist. Zur Erhöhung der Reißfestigkeit dient ein zwischen diesen beiden Schichten bzw. in der obersten Schicht befindliches Gewebe. Neben der Tatsache, daß das bekannte Verfahren aufwendig und teuer ist, ergibt sich darüber hinaus das Problem, daß bei wärmerückstellbaren Werkstoffbahnen, in die Gewebe eingebracht sind, eine höhere Warmezufuhr beim Wärmeschrumpfprozeß im Vergleich zu Werkstoffbahnen ohne Gewebe erforderlich ist. Weiterhin sind die bekannten Manschetten bzw. Werkstoffbahnen in geschrumpftem Zustand durch das eingebrachte Gewebe nur schwer zu öffnen.

Neben der Erhöhung der Reißfestigkeit kennt man aus der DE-OS 41 26 355 die Möglichkeit, eine wärmerückstellbare Werkstoffbahn mit einer polymeren Deckschicht, einer wärmestabilen Netzschicht und einer wärmeschrumpffähigen Rückstellschicht auszubilden. Die Rückstellschicht besteht dabei aus einer vernetzten, verstreckten Kunststoffbahn, welche in Schrumpfrichtung mittels die Kunststoffbahn durchdringender Teilungsschnitte unter Bildung von Schrumpfbändern vorgegebener Breite unterteilt ist. Dadurch gewährleistet die Rückstellschicht gemeinsam mit der wärmestabilen Netzschicht eine hohe Reißfestigkeit der Werkstoffbahn im festen und selbst im schmelzflüssigen Zustand.

Aus der AT-E 2939 ist ein Verfahren zum Herstellen heißschrumpfbarer Muffen aus einem vernetzten Kunststoff durch Extrudieren eines Muffenstückes bei einer unterhalb der Vernetzungstemperatur des Kunststoffes liegenden Temperatur bekannt. Dabei wird das Muffenstück auf zumindest die Vernetzungstemperatur erhitzt und durch anschließendes Aufweiten und gleichzeitiges Kühlen des Muffenstückes auf den gewünschten Durchmesser gebracht. Im einzelnen wird so verfahren, daß das extrudierte Muffenstück auf eine Länge geschnitten wird, die im wesentlichen der Länge der fertigen Muffe oder eines Vielfachen davon entspricht, wobei die geschnittenen Muffenstücke auf die Vernetzungstemperatur des Kunststoffes erhitzt werden, während sie sowohl an ihrer Außenseite als auch ihrer Innenseite festgehalten sind. Weiter wird das vernetzte Muffenstück bei gleichzeitiger Kühlung auf den gewünschten Muffendurchmesser rings um zwei oder mehr zueinander parallele, sich drehende Walzen aufgeweitet, die voneinander wegbewegt werden. Dadurch sollen Probleme der Formstabilität und der ungleichmäßigen Aufweitung bei dem Muffenstück beseitigt werden. Die DE-A-35 28 066 beschäftigt sich mit einem Verfahren zum chemischen Vernetzen von schrumpfbarem Kunststoffmaterial. Dabei wird das mit Vernetzungsanregern vermengte Kunststoffmaterial bei einer Temperatur unterhalb der Ansprechtemperatur des Vernetzungsanregers extrudiert und anschließend die Vernetzung durch entsprechende Temperaturführung geregelt. Die nachfolgende Aufweitung bzw. Verstreckung des extrudierten Gegenstandes erfolgt ebenfalls unterhalb der Ansprechtemperatur der Vernetzung.

In der GB-A-2 019 412 wird eine Werkstoffbahn in Form einer extrudierten Kunststoffbahn aus einem vernetzbaren Polymer beschrieben. Die Vernetzung kann u.a. unter Zuhilfenahme eines Peroxides bewerkstelligt werden. Außerdem werden bei der bekannten Lehre Mischungen von linearen Ethylen-Homo- oder Copolymeren mit anderen Homo- oder Copolymeren beschrieben.

Aus der EP-A-0 172 645 ist eine Polymermischung bekannt, welche auch zur Wärmeschrumpfung geeignet ist. Zwar enthält diese Mischung ein Ethylen-Copolymer, allerdings in Verbindung mit einer Gummikomponente. Hiermit wird ein natürliches oder synthetisches Polymer bezeichnet, welches so vulkanisiert oder behandelt werden kann, daß elastomere Eigenschaften erreicht werden. Die Verwendung von Ethylen-Propylen-Copolymeren (EPM) wird ausgeschlossen.

Durch die EP-A-0 426 257 ist eine wärmeschrumpffähige Werkstoffbahn zur Umhüllung von beispielsweise Kabelverbindungen bekannt geworden, welche aus einem vernetzbaren Polymer besteht. Bei diesem Polymer handelt es sich bevorzugt um Polyethylen, welches eine Matrix formt, in die einzelne elastomere Teilchen eingebracht sind. Diese elastomeren Teilchen können u. a. aus Ethylen-Propylen-Copolymer bestehen. Die Teilchen werden bevorzugt vernetzt oder vulkanisiert, bevor sie in die Polyethylenmatrix eingebracht werden. Zwar ist es auch möglich, auf diese Vorbehandlung zu verzichten, jedoch wird insgesamt bei der bekannten Lehre generell von einer Strahlenvernetzung ausgegangen.

Schlußendlich ist aus der DE-A-27 19 308 ein Verfahren zur Herstellung vernetzter Schrumpfschläuche bekannt, bei dem das Schlauchmaterial im Bereich der Aufblaszone, in welcher der Schlauchdurchmesser noch auf einen verhältnismäßg kleinen Wert begrenzt ist, chemisch vernetzt wird. Dabei wird das dem Kunststoff beigemengte Vernetzungsmittel, beispielsweise Peroxid, durch Zuführen von Wärme zur Reaktion gebracht.

Der Erfindung liegt die Aufgabe zugrunde, ein Verfahren der eingangs beschriebenen Art anzugeben, wonach bei einer einfachen und preiswerten Herstellung eine wesentliche Erhöhung der Rißstabilität und ein problemloses Öffnen des Schrumpfproduktes bzw. der aufgeschrumpften Umhüllung erreicht wird.

Zur Lösung dieser Aufgabe ist das gattungsgemäße Verfahren dadurch gekennzeichnet, daß das Polymer oder Polymergemisch bei einer Verarbeitungstemperatur mit einer definierten, durch den kautschukelastischen Modul charakterisierten stabilen oder temporären Vernetzungsdichte extrudiert und danach die erhaltene Kunststoffbahn abgekühlt wird, daß die Kunststoffbahn anschließend unter Erzeugung einer zu ihrem Kern oder der der Wärmequelle gegenüberliegenden Seite hin abnehmenden Temperatur erwärmt und bei einer Temperatur des Kerns oder der der Wärmequelle gegenüberliegenden Seite unterhalb der Kristallitschmelztemperatur teilkristalliner Polymere oder Polymergemische bzw. unterhalb der Glastemperatur amorpher Polymere oder Polymergemische mit einer über den Querschnitt der Kunstoffbahn entstehenden Orientierung verstreckt wird. - Unter einer Orientierung wird die Ausrichtung von Strukturelementen im Raum verstanden. Strukturelemente stellen dabei Molekülsegmente, Moleküle und Überstrukturen wie z. B. Kristalle usw. dar. Für einfache Orientierungszustände, z. B. einer einachsig verstreckten Polymerprobe, ist die räumliche Lage der Molekülsegmente außer durch ihre Schwerpunktlage durch eine zylindersymmetrische Verteilung ihrer Achse um die Streckrichtung gegeben. Für flächige Produkte wie die Schrumpffolie liegt eine bevorzugt planare Orientierung der Molekülsegmente bzw. der Kristallite vor, die nicht immer konform laufen muß. Zur Bestimmung der Orientierungen werden der Schrumpfvorgang und eine röntgenografische Untersuchung als praktisch relevante Methode empfohlen.

Für eine quantitative Beurteilung des Orientierungszustandes wird bevorzugt das Verfahren der Röntgenweitwinkelstreuung verwendet (WAXS). Für eine quantitative Beurteilung des Orientierungszustandes wird die Intensität des abgebeugten Röntgenstrahls bei Beugungswinkel zwischen 5° und 15° kontinuierlich registriert, wobei die Probe eine Rotation um ihre Normale ausführt. Es lassen sich für die Kunststoffe typische Netzebenen erkennen. Diesen Interferenzpeaks aufgeprägt sind Intensitätsschwankungen, die aus der Rotation der Probe mit der Normalen herrühren und die Orientierung der einzelnen Netzebenen im teilkristallinen Werkstoff charakterisieren. Zur quantitativen Auswertung der Röntgenbeugungsuntersuchungen wird vereinfacht der Orientierungsgrad nach KAST bestimmt. Der Orientierungsgrad $f_x$ als Maß für die Ausrichtung der Normale der Netzebenen in eine bestimmte Richtung ergibt sich nach Untergrundskorrektur aus dem Verhältnis von mittlerer Intensität $\bar{h}$ und maximaler Intentsität $h_{max}$ des gebeuten Röntgenstrahls:

$$f_x = 1 - \frac{\bar{h}}{h_{max}} \qquad (3)$$

Die Erfindung geht zunächst einmal von der Erkenntnis aus, daß nur flexibelkettige Polymere oder Polymergemische nach dem Verstrecken wieder geschrumpft werden können und folglich wärmerückstellbar sind.

Bei diesen Polymeren oder Polymergemischen liegen die Moleküle im geschmolzenen oder gelösten Zustand als sich gegenseitig durchdringende Knäule vor. Dies fuhrt zu einer Vielzahl von Kontakten der Moleküle untereinander und damit zu Verhakungen und Verschlaufungen. Mit sinkender Temperatur nehmen die Kontakte durch räumliche Annäherung zu, bzw. an Umwandlungsprodukten werden geordnete Gebilde mit höherer Bindungsenergie zwischen den Molekülen, wie z.B. Kristalle gebildet. Alle diese genannten Kontakte wirken bei einer bestimmten Temperatur und einem bestimmten Zeitraum wie Vernetzungen und werden auch als temporäre Vernetzungen bezeichnet. Während die aus einer räumlichen Anordnung (Verhakungen und Verschlaufungen) resultierenden temporären Vernetzungen eine kontinuierliche Änderung mit der Temperatur zeigen, werden die aus energetischen Kontakten resultierenden temporären Vernetzungen, wie z.B. Kristalle, am Schmelzpunkt abgebaut. Sind die Relaxationszeiten zum Abbau der temporären Vernetzung länger als die Beanspruchungszeiten, z. B. die Schrumpfzeiten, wirken die temporären Vernetzungen wie stabile chemische Vernetzungen und sind von diesen im mechanischen Verhalten nicht mehr zu unterscheiden. Wichtig für den Schrumpfvorgang sind die Vernetzungen im geschmolzenen Zustand bzw. im Temperaturbereich oberhalb der Glastemperatur amorpher Kunststoffe, so daß zur Charakterisierung der Schrumpfmaterialien nur die Vernetzungen oberhalb der Glas- bzw. Schmelztemperatur von Bedeutung sind.

Folglich werden im Rahmen der Erfindung Polymere oder Polymergemische mit einer hinreichenden Anzahl stabiler und temporärer Vernetzungen, charakterisiert durch die Größe des kautschukelastischen Moduls, die in ihrer Relaxationszeit höher als die Beanspruchungszeiten beim später stattfindenden Wärmeschrumpfprozeß liegen, extrudiert, so daß das extrudierte Material deutlich gummielastische Eigenschaften im geschmolzenen Zustand zeigt.

Im Ergebnis wird durch die Maßnahmen der Erfindung erreicht, daß eine wärmerückstellbare Werkstoffbahn auf einfache und preiswerte Weise hergestellt werden kann, denn es wird erfindungsgemäß auf das komplizierte Einbringen von rißhemmenden Materialien verzichtet. Die wesentliche Erhöhung der Rißstabilität gegenüber Standard-Schrumpfprodukten wird dadurch erreicht, daß ein Polymer oder Polymergemisch mit einer vorgegebenen Vernetzungsdichte (temporäre und stabile Vernetzungen), charakterisiert durch den kautschukelastischen Modul, verstreckt und später geschrumpft wird, wobei das Polymer oder Polymergemisch infolge einer entsprechend niedrigen Verstrekkungstemperatur eine dennoch hohe Schrumpfkraft besitzt. Bei der nach der Lehre der Erfindung hergestellten Werkstoffbahn handelt es sich um eine kaltverstreckte Kunststoffbahn, bei der aufgrund der unterhalb des Kristallitschmelzpunktes bzw. der Glastemperatur liegenden Verstrecktemperatur die geordneten Bereiche, wie z. B. Kristalle, unter Berücksichtigung einer über den Querschnitt der Kunststoffbahn gebildeten Orientierungsverteilung als multifunktionelle Vernetzungspunkte wirken. Aus einer entsprechenden Verstreckung bzw. Dehnung der Kunststoffbahn resultiert dadurch in einem abschließenden Wärmeschrumpfprozeß eine höhere Schrumpfspannung als bei einer Verstrecktemperatur oberhalb des Kristallitschmelzpunktes. Auf diese Weise schrumpft die erfindungsgemäße wärmerückstellbare Kunststoff- bzw. Werkstoffbahn energiearm, bei relativ niedrigen Temperaturen und sehr schnell. Beim Wärmeschrumpfprozeß werden mit steigender Erwärmung die geordneten Bereiche und Kristallite zerstört, die Anzahl der Vernetzungspunkte wird drastisch reduziert und die Schrumpfspannung fällt auf einen Wert, welcher der Größe der in diesem Temperatur- und Zeitbereich den temporären und stabilen Vernetzungen entspricht. Diese Schrumpfspannung ist dann aufgrund der verhältnismäßig niedrigen Vernetzungen so gering, daß ein Weiterreißen eines Risses nur sehr langsam vonstatten geht, wenn ein solcher Riß überhaupt weiter reißen sollte.

Weitere erfindungswesentliche Merkmale sind im folgenden aufgeführt. So empfiehlt die Erfindung die Extrusion eines Polymers oder Polymergemisches mit einem so hohen Molekulargewicht, daß, durch den kautschukelastischen Modul ausgedrückt, schon hinreichend viele während des Schrumpfvorganges noch als stabil wirkende Vernetzungen vorhanden sind. Es besteht aber auch die Möglichkeit, daß die Vernetzungsdichte des Polymers oder Polymergemisches vor seiner Extrusion und/oder im Zuge seiner Extrusion und/oder nach seiner Extrusion mittels energiereicher Strahlen und/oder chemischer Mittel wie Peroxide, Schwefelverbindungen, phenolische Vulkanisationssysteme, Vernetzungsbeschleuniger alleine oder in Mischung oder in Kopplung der einzelnen Methoden untereinander entsprechend erhöht wird. Nach einem anderen Vorschlag der Erfindung wird ein teilkristalliner Kunststoff oder Kunststoffgemisch verwendet, deren Kristallitschmelztemperaturen oberhalb der Schrumpftemperatur liegen, so daß die nicht aufgeschmolzenen größeren Kristalle als stabile Vernetzungen wirken.

Vorzugsweise wird ein Polymer oder Polymergemisch mit einer Vernetzungsdichte, charakterisiert durch den kautschukelastischen Modul im Bereich von $10^{-4}$ N/mm$^2$ - 10 N/mm$^2$ , eingesetzt. Die meßtechnische Bestimmung der Vernetzungsdichte von temporären und stabilen Vernetzungen ist im starken Maße von der Meßmethode abhängig.

Zur meßtechnischen Bestimmung von Vernetzungen sind eine Reihe von Methoden bekannt. Die technisch wichtigsten sind im Nachfolgenden genannt.

- mechanische Messungen
..Gleichgewichtszugversuch
..Hot-Set

- Quellung
..Gleichgewichtsquellung
..Gelanteil

Zur Bestimmung der temporären Vernetzungen sind die nachfolgenden Methoden bekannt.

- mechanische Messung
..statischer Modul, bervorzugt im Zug
..dynamischer Modul, bevorzugt bei Sicherung
..maximaler Reckgrad
- Viskositätsmessung

- Bestimmung der Knäueldurchmesser

Eine gute Übereinstimmung bei mit unterschiedlichen Methoden bestimmten temporären Vernetzungen ergibt sich immer dann, wenn die Prüfmethode mit der praktischen Belastung gut übereinstimmt. Für den hier dargestellten Fall einer uniaxialen Verstreckung bzw. Schrumpfung wird deshalb der Zugmodul zur Charakterisierung verwendet.

Zur Bestimmung des kautschukelastischen Moduls aus dehnrheologischen Experimenten, wird ein Rheometer nach dem Meißnerschen Prinzip verwendet. Neben der Bestimmung des Spannungs-Gesamtdehnungs-Zusammenhangs, wird durch Schrumpfen der einzelnen Probekörper mit unterschiedlicher Gesamtdehnung der reversible Dehnungsanteil bestimmt.

$$\lambda \text{ ges} = \lambda \text{ irrev} + \lambda \text{ rev} \qquad (1)$$

$\lambda_{ges}$ =   Gesamtdehnung
$\lambda_{irrev}$ =   irreversible Dehnung
$\lambda_{rev}$ =   reversible Dehnung

Ausgehend von diesen Meßgrößen, gestattet die Auftragung der Spannung gegenüber der reversiblen (elastischen) Dehnung im kautschukelastischen Deformationsmaß $\lambda^2_{rev}$ - $\lambda^{-1}_{rev}$ die Bestimmung des kautschukelastischen Moduls. Den Bereich kleiner Dehnungen nicht berücksichtigend, ergibt sich - der Theorie entsprechend - ein linearer Verlauf der Spannung mit der reversiblen Dehnung.

Zur Ermittlung dehnungsunabhängiger Modulwerte, wurde linear auf eine Dehnungeschwindigkeit von $\dot{\varepsilon} = 0$ extrapoliert. Unter Verwendung von der folgenden Gleichung (2) kann dann der kautschukelastische Modul $E_k$ bestimmt werden.

$$E_k = \frac{\sigma_w}{\lambda^2_{rev} - \lambda^{-1}_{rev}} \quad \dot{\varepsilon} \Rightarrow 0 \qquad (2)$$

$\sigma_w =$    wahre Spannung
$\dot{\varepsilon} =$    Dehngeschwindigkeit
$E_k =$    kautschukelasticher Modul

Im vorliegenden Fall wird als Meßmethode der Zugversuch mit einer Extrapolation auf die Abzugsgeschwindigkeit von Null und eine Abtrennung der Fließeffekte herangezogen. Als Maß für die Vernetzungsdichte wird der kautschukelastische Modul bei einer Prüftemperatur von 150°C verwendet.

Weiter sieht die Erfidnung vor, daß die Kunststoffbahn nach ihrer Extrusion unvollständig oder vollständig abgekühlt wird. Eine unvollständige Abkühlung auf ca. 60° - 70°C ist beispielsweise dann gegeben, wenn die Kunststoffbahn nach ihrer Extrusion alsbald weiterverarbeitet wird, während vollständige Abkühlung eine Abkühlung auf Raumtemperatur meint, wenn die extrudierte Kunststoffbahn vor ihrer Weiterverarbeitung beispielsweise zwischengelagert wird. Im Zuge der Weiterverarbeitung sieht die Erfindung vor, daß die extrudierte Kunststoffbahn ein- oder beidseitig erwärmt wird, um die zum Kern hin oder der Wärmequelle entgegengesetzte Seite abnehmende Temperatur zu erzeugen. Ein solches Erwärmen erfolgt regelmäßig bei einer Temperatur von 5°C - 50°C oberhalb der Kristallitschmelztemperatur der teilkristallinen Polymerkomponente, so daß eine Relaxation der infolge des Verstreckvorganges gebildeten Orientierungen an der/den erwärmten Oberfläche (-flächen) der Kunststoffbahn hin bis auf den Wert der durch die stabilen Vernetzungen erzeugten Spannungswerte abnehmen. Damit wird zusätzlich die Rißanfälligkeit reduziert.

Nach einem Vorschlag der Erfindung, dem selbständige Bedeutung zukommt, ist bei einer Peroxid enthaltenden, aus einem vernetzbaren Polymer bestehenden Kunststoffbahn vorgesehen, daß die Kunststoffbahn bei einer Temperatur unterhalb der Reaktionstemperatur des oder der Peroxide extrudiert wird, daß die Kunststoffbahn danach teilvernetzt und bei einer Temperatur unterhalb der Kristallitschmelzpunkte bzw. im Übergangsbereich vom glaszum kautschukelastischen Bereich der teilvernetzten Kunststoffbahn kaltverstreckt wird, und daß die Kunststoffbahn abschließend erst bei einem später stattfindenden Wärmeschrumpfprozeß fertig vernetzt wird. Auch auf diesem Wege wird erreicht, daß eine wärmerückstellbare Werkstoffbahn auf einfache und preiswerte Weise hergestellt werden kann, denn es wird erfindungsgemäß auf das komplizierte Einbringen von rißhemmenden Materialien verzichtet. Die wesentliche Erhöhung der Rißstabilität gegenüber Standard-Schrumpfprodukten wird dadurch erreicht, daß ein relativ wenig vernetzter Kunststoff geschrumpft wird, der durch die entsprechend niedrige Verstrecktemperatur jedoch eine hohe Schrumpfkraft besitzt. Dabei kann die Vernetzung über Strahlung, durch ein Peroxid in einer Mischung unterschiedlicher Peroxide mit schneller und vollständiger Reaktion, bzw. durch nur ein langsam reagierendes Peroxid, welches nur teilweise reagiert, durch eine Peroxid-Silan-Mischung und entsprechender Lagerung bei Wärme und Feuchtigkeit erfolgen. Die Dichte der chemischen Vernetzungen, berechnet aus der Schrumpfspannung bzw. aus den Hot-Set-Messungen liegt für das teilvernetzte Material im Bereich von 2 x $10^{13}$/mm³ bis 2,5 x $10^{11}$/mm³.

(Unter einer "chemischen Vernetzung" wird die hauptvalenzmäßige Verbindung von zwei oder mehr Molekülen verstanden, während unter einer "physikalischen Vernetzung" eine Verhakung und/oder Verschlaufung bzw. eine nebenvalenzmäßige Verbindung wie z. B. Kristalle verstanden wird). Für einen idealen Kautschuk besteht ein direkter Zusammenhang von Vernetzungsdichte und resultierender Zug- bzw. Schrumpfspannung. Chemisch vernetzte Polymere verhalten sich genügend weit oberhalb der Glas- bzw. Schmelztemperatur nahezu kautschukelastisch. Die wahre Spannung berechnet sich zu

$$\sigma_w = E_k \cdot \lambda^2 - \lambda^{-1}$$

$\sigma_w$    wahre Spannungen (Kraft/wirkliche Flache)
$E_k$    kautschukelastischer Modul
$\lambda$    Reckgrad

$$\lambda = \frac{L_1}{L_0}$$

$L_0$    Länge vor der Deformation
$L_1$    Länge nach dar Deformation

$$E_k = 3NkT$$

$k$    Boltzmannkonstante
$T$    absolute Temperatur
$N$    Netzwerkdichte

Der Schrumpfspannungsverlauf, wie er für ein kaltverstrecktes Material im Vergleich zu einem oberhalb der Schmelztemperatur verstreckten Material erfolgt, läßt sich dadurch erklären, daß bei einer Verstrecktemperatur, die unterhalb des Kristallitschmelzpunktes bzw. im Übergangsbereich vom glas- zum kautschukelastischen Zustand liegt, die geordneten Bereiche bzw. Kristallite als multifunktionelle Vernetzungspunkte wirken. Aus einer entsprechenden Verstreckung bzw. Dehnung der Kunststoffbahn resultiert dadurch im abschließenden Wärmeschrumpfprozeß eine höhere Schrumpfspannung als im geschmolzenen Zustand, d. h. wenn bei einer Temperatur oberhalb des Kristallitschmelzpunktes verstreckt wird. Auf diese Weise schrumpft die erfindungsgemäße wärmerückstellbare Werkstoffbahn sehr schnell. Beim Wärmeschrumpfprozeß werden mit steigender Erwärmung die geordneten Bereiche bzw. Kristallite zerstört und die Schrumpfspannung fällt auf den Wert, der der chemischen Vernetzung entspricht. Diese Spannung, die dann alleine aus einer chemischen Vernetzung resultiert, ist aufgrund der minimalen Vernetzung so gering, daß ein Weiterreißen eines Risses, wenn überhaupt, nur sehr langsam vonstatten geht. Während des Wärmeschrumpfprozesses wird durch das nicht reagierte Peroxid ein zweites stabiles Netzwerk aufgebaut, welches die aufgeschrumpfte Umhüllung fixiert und einer Rißentstehung entgegenwirkt, bzw. eine Rißausbreitung verhindert.

Weiter ist vorgesehen, daß das Extrusionsmaterial bevorzugt aus einer Mischung mit den Hauptkomponenten Polyethylen (PE) (0 bis 95 %), Ethylen-Mischpolymerisate, wie z. B. EVA, EMA, Fluor-Mischpolymerisate, Chlor-Mischpolymerisate oder dergleichen (0 bis 95 %), Ethylen/Propylen-Co- bzw. Terpolymer (EPM/EPDM) zu 0 bis 95 %, Ruß zu 3 bis 25 %, Stabilisatoren und Flammschutz zu 1 bis 20 % und einem Peroxid, z. B. einem Hexamethyl-1,2,3,5-tetra-oxacyclononan(HMCN)-Peroxid, bzw. einer Mischung mit anderen schneller reagierenden Peroxiden, wie z. B. Dicumylperoxiden, besteht. Weiter ist vorgesehen, daß das Peroxid vorzugsweise während des Compoundierens der Hauptkomponenten oder in das compoundierte Extrusionsmaterial eingearbeitet wird. Dabei kann auch ein Gemisch aus Peroxiden mit unterschiedlicher Reaktionstemperatur zum Einsatz kommen. Die Teilvernetzung der Kunststoffbahn kann durch Strahlung, bei Peroxiden durch ein Salzbad oder im Dampf und/oder durch Silane erfolgen, wobei die Netzwerkdichte bzw. der Grad der Vernetzung bei einer gegebenen Peroxidmenge durch die Salzbad(Dampfbad)durchlaufzeit und die Temperatur einstellbar ist. Die Teilvernetzung kann auch im Rahmen einer geheizten Kalibrierung mit Oberflächenschmierung durchgeführt werden, bzw. durch eine Mikrowellenerwärmung und gleichzeitige Kühlung erfolgen. Für Silan-Peroxid-Mischungen geschieht dies in einem erwärmten Wasserbad. Dabei wird die Netzwerkdichte und/oder die Schrumpfspannung bei einer Prüftemperatur für Polyethylen von 200°C und für Kunststoffmischungen wie Ethylen/Propylen bei Temperaturen, die 80°C über der Kristallitschmelztemperatur liegen, aus einem Zugversuch oder einem Relaxationsversuch bestimmt. Außerdem ist vorgesehen, daß die teilvernetzte Kunststoffbahn bevorzugt in einer temperierten Flüssigkeit wie Öl, Ölmischungen oder dergleichen, oder z. B. durch Mikrowellen auf eine Temperatur unterhalb des Kristallitschmelzpunktes, d. h. unterhalb der Schmelztemperatur der kristallinen Bereiche, bzw.

im Übergangsgebiet vom glas- zum kautschukelastischen Gebiet, erwärmt und auf Reckmaß verstreckt wird. Die Fertigvernetzung der kaltverstreckten Kunststoffbahn beim Wärmeschrumpfprozeß wird vorzugsweise in Abhängigkeit von der Zeit und der Temperatur der Wärmebehandlung bei einer gegebenen Peroxidmenge nach Maßgabe der Anzeige eines Indikators auf der Oberfläche der Kunststoffbahn durchgeführt.

Gegenstand der Erfindung ist auch eine Werkstoffbahn zum Herstellen einer insbesondere auf Kabelverbindungen und/oder Kabelabzweigungen aufschrumpfbaren Umhüllung in der Ausführungsform einer Peroxid enthaltenden und extrudierten Kunststoffbahn aus einem vernetzbaren Polymer, welche dadurch gekennzeichnet ist, daß die Kunststoffbahn aus einem Extrusionsmaterial hergestellt ist, welches aus einer Mischung mit den Hauptkomponenten Polyethylen 0 bis 95 %, bevorzugt 60 bis 80 %, Ethylen-Mischpolymerisaten 0 bis 95 %, bevorzugt 10 bis 20 %, Ethylen-Propylen-Co- oder Terpolymerisaten 0 bis 95 %, bevorzugt 5 bis 20 %, Ruß zu 3 bis 25 %, Stabilisatoren und Flammschutz zu 1 bis 20 %, Peroxid oder Peroxidgemisch zu 0,2 bis 20 % besteht. Auf diese Weise wird eine Werkstoff- bzw. Kunststoffbahn aus einem Werkstoff zur Verfügung gestellt, welche sich unschwer teilvernetzen und kaltverstrecken läßt, so daß eine wärmerückstellbare Werkstoffbahn zur Verfügung steht, deren Nachvernetzung erst bei einem später stattfindenden Wärmeschrumpfprozeß erfolgen kann. Die Teilvernetzung gelingt durch ein langsam reagierendes Peroxid oder durch ein Peroxid in einer Mischung unterschiedlicher Peroxide mit schneller und vollständiger Reaktion unter Berücksichtigung einer entsprechenden Lagerung bei Wärme und Feuchtigkeit. Insoweit findet eine "chemische Vernetzung" statt, unter welcher eine hauptvalenzmäßige Verbindung von zwei oder mehr Molekülen verstanden wird. Chemisch vernetzte Polymere verhalten sich hinreichend weit oberhalb der Glas- bzw. Kristallitschmelztemperatur nahezu kautschukelastisch. Während des Wärmeschrumpfprozesses wird durch das nicht reagierte Peroxid ein weiteres stabiles Netzwerk aufgebaut, welches die aufgeschrumpfte Umhüllung fixiert und einer Rißentstehung ebenso entgegenwirkt wie eine Rißausbreitung verhindert. Jedenfalls läßt sich aus der erfindungsgemäßen Werkstoff- bzw. Kunststoffbahn eine wärmerückstellbare Werkstoffbahn herstellen, die sich auch ohne kompliziertes Einbringen von rißhemmenden Materialien durch eine deutlich verminderte Rißanfälligkeit bzw. wesentlich erhöhte Reißfestigkeit auszeichnet. Das gelingt in verhältnismäßig einfacher und kostensparender Weise.

Weiter ist vorgesehen, daß als Peroxid ein langsam reagierendes Peroxid wie z. B. ein Hexamethyl-1,2,3,5-tetra-oxacyclononan (HMCN)-Peroxid bzw. eine Mischung mit anderen schneller reagierenden Peroxiden wie z. B. Dicumylperoxiden Verwendung finden kann. Ferner ist vorgesehen, daß das Peroxid vorzugsweise während des Compoundierens der Hauptkomponenten oder in das compoundierte Extrusionsmaterial eingearbeitet wird. Dabei kann auch die Einarbeitung eines hygroskopischen Materials erfolgen. Die Teilvernetzung der erfindungsgemäßen Kunststoffbahn kann wegen des Peroxids bzw. Peroxidgemisches durch ein Salzbad oder im Dampf erfolgen, wobei die Netzwerkdichte bzw. der Grad der Vernetzung bei einer gegebenen Peroxidmenge durch die Salzbad(Dampfbad)durchlaufzeit und die Temperatur einstellbar ist. Dabei wird die Netzwerkdichte und/oder die Schrumpfspannung bei einer Prüftemperatur für Polyethylen von 200°C und für Kunststoffmischungen wie Ethylen/Propylen bei Temperaturen, die 80°C über der Kristallitschmelztemperatur liegen, aus einem Zugversuch oder einem Relaxationsversuch bestimmt. Bei der erfindungsgemäßen Werkstoff- bzw. Kunststoffbahn kann beispielsweise die Dichte des Netzwerkes der Teilvernetzung $2 \times 10^{13}/mm^3$ bis $2,5 \times 10^{11}/mm^3$ betragen. Darüber hinaus kann die Dichte des Netzwerkes, welches durch Nachvernetzen der nach dem Extrudieren teilvernetzten und kaltverstreckten Kunststoffbahn erzielt wird im Bereich von $2 \times 10^{11}/mm^3$ bis $5 \times 10^9/mm^3$ liegen.

Im folgenden wird die Erfindung anhand eines Beispiels näher erläutert:

Als Ausgangsmaterial wird eine Mischung aus zwei Polymeren, die zusammen 89 % des Gesamtmaterials ausmachen, mit 11 % Vernetzungsbeschleuniger, Flammschutz und Stabilisatoren verwendet. Das Polymergemisch besteht zu 80 % aus Polyethylen niederer Dichte und zu 20 % aus Ethylenvenylacetat. Das mit allen Zusätzen versehene Gesamtmaterial wird compoundiert und granuliert. Nach einer Vorprüfung wird das Granulat mit Gammastrahlen derart vernetzt, daß das kautschukelastische Modul im Bereich von 1,5 bis $10^{-3}$ $N/mm^2$ liegt. Die Extrusion des so vernetzten Granulats wird bei einer Temperatur von 210°C und einer Schneckenkonstruktion mit sehr geringer Scherung durchgeführt. Die Kunststoffbahn oder ein ähnliches Profil wird kalibriert und auf Raumtemperatur abgekühlt. Anschließend erfolgt die Verstreckung der Kunststoffbahn. Zur Verstreckung wird die Kunststoffbahn durch Wärmestrahler einseitig an der Oberfläche auf eine Oberflächentemperatur von 240°C erwärmt und oberflächig auf eine Dicke von 0,8 mm aufgeschmolzen. Die Verstreckung selbst erfolgt ohne weitere Wärmezufuhr bei einer Temperatur der Unterseite der Kunststoffbahn von 70°C auf den gewünschten Reckgrad. Nach dem Verstrecken wird die Kunststoffbahn bzw. nunmehr wärmerückstellbare Werkstoffbahn oder Manschette zum Umhüllen von Kabelverbindungen und/oder Kabelabzweigungen abgekühlt und gefinisht.

## Patentansprüche

1.  Verfahren zur Verminderung der Rißanfälligkeit einer wärmerückstellbaren Werkstoffbahn zum Herstellen einer insbesondere auf Kabelverbindung und/oder Kabelabzweigungen aufschrumpfbaren Umhüllung aus einer aus einem vernetzbaren Polymer oder Polymergemisch bestehenden Kunststoffbahn, wonach die Kunststoffbahn durch Extrusion hergestellt, vernetzt, unter Erwärmung verstreckt und abschließend in verstrecktem Zustand abgekühlt wird, **dadurch gekennzeichnet**, daß das Polymer oder Polymergemisch bei einer Verarbeitungstemperatur mit einer definierten, durch den kautschukelastischen Modul charakterisierten, stabilen oder temporären Vernetzungsdichte extrudiert und danach die erhaltene Kunststoffbahn abgekühlt wird, und daß die Kunststoffbahn anschließend unter Erzeugung einer zu ihrem Kern oder der der Wärmequelle gegenüberliegenden Seite hin abnehmenden Temperatur erwärmt und bei einer Temperatur des Kerns oder der der Wärmequelle gegenüberliegenden Seite unterhalb der Kristallitschmelztemperatur teilkristalliner Polymere oder Polymergemische bzw. unterhalb der Glastemperatur amorpher Polymere oder Polymergemische mit einer über den Querschnitt der Kunststoffbahn entstehenden Orientierung verstreckt wird.

2.  Verfahren nach Anspruch 1, dadurch gekennzeichnet, daß das Polymer oder Polymergemisch mit einem so hohen Molekulargewicht extrudiert wird, daß hinreichend viele während des Schrumpfvorganges noch als stabil wirkende Vernetzungen erzeugt werden.

3.  Verfahren nach Anspruch 1 oder 2, dadurch gekennzeichnet, daß die Vernetzungsdichte des Polymers oder Polymergemisches vor seiner Extrusion und/oder im Zuge seiner Extrusion und/oder nach seiner Extrusion mittels energiereicher Strahlen und/oder chemischer Mittel wie Peroxide, Schwefelverbindungen, phenolische Vulkanisationssysteme, Vernetzungsbeschleuniger alleine oder in Mischung oder in Kopplung der einzelnen Methoden untereinander hinreichend erhöht wird.

4.  Verfahren nach einem der Ansprüche 1 bis 3, dadurch gekennzeichnet, daß das Polymer oder Polymergemisch mit einem kautschukelastischen Modul im Bereich von $10^{-4}$ $N/mm^2$ bis 10 $N/mm^2$ als Maß für die Vernetzungsdichte verwendet wird.

5.  Verfahren nach einem der Ansprüche 1 bis 4, dadurch gekennzeichnet, daß die Kunststoffbahn nach ihrer Extrusion unvollständig oder vollständig abgekühlt wird.

6.  Verfahren nach einem der Ansprüche 1 bis 5, dadurch gekennzeichnet, daß die extrudierte Kunststoffbahn ein- oder beidseitig erwärmt wird, um eine zum Kern hin oder zu der der Wärmequelle entgegengesetzten Seite hin abnehmende Temperatur zu erzeugen.

7. Verfahren nach einem der Ansprüche 1 bis 6, wonach die aus einem vernetzbaren Polymer bestehende Kunststoffbahn Peroxid enthält, dadurch gekennzeichnet, daß die Kunststoffbahn bei einer Temperatur unterhalb der Reaktionstemperatur des oder der Peroxide extrudiert wird, daß die Kunststoffbahn danach teilvernetzt und bei einer Temperatur unterhalb der Kristallitschmelzpunkte bzw. im Übergangsbereich vom glas- zum kautschukelastischen Bereich der teilvernetzten Kunststoffbahn kaltverstreckt wird und daß die Kunststoffbahn abschließend erst bei einem später stattfindenden Wärmeschrumpfprozeß fertigvernetzt wird.

8. Verfahren nach Anspruch 7, dadurch gekennzeichnet, daß ein Gemisch aus Peroxiden mit unterschiedlicher Reaktionstemperatur und unterschiedlicher Reaktionszeit zum Einsatz kommt.

9. Verfahren nach Anspruch 7, dadurch gekennzeichnet, daß eine Teilvernetzung, durch Strahlen, oder Peroxide, und/oder Silane erfolgt.

10. Verfahren nach Anspruch 7, dadurch gekennzeichnet, daß die Kunststoffbahn durch Peroxid in einem Salzbad, oder unter Dampf teilvernetzt wird, wobei die Netzwerkdichte bzw. der Grad der Vernetzung bei einer gegebenen Peroxidmenge durch die Durchlaufzeit und die Temperatur einstellbar ist.

11. Verfahren nach Anspruch 7, dadurch gekennzeichnet, daß die Teilvernetzung durch Peroxid im Rahmen einer geheizten Kalibrierung mit Oberflächenschmierung durchgeführt wird.

12. Verfahren nach Anspruch 7, dadurch gekennzeichnet, daß eine Nachvernetzung durch Peroxid über eine Mikrowellenerwärmung und gleichzeitiger Oberflächenkühlung erfolgt.

13. Verfahren nach Anspruch 7, dadurch gekennzeichnet, daß die teilvernetzte Kunststoffbahn in einer temperierten Flüssigkeit wie Öl, Ölmischungen oder dergleichen auf eine Temperatur unterhalb des Kristallitschmelzpunktes bzw. im Übergangsbereich vom glas- in den kautschukelastischen Zustand auf Reckmaß verstreckt wird.

14. Verfahren nach Anspruch 7, dadurch gekennzeichnet, daß eine Erwärmung auf die Verstrecktemperatur der Kunststoffbahn unterhalb der Schmelztemperatur der kristallinen Bereiche bzw. in das Übergangsgebiet vom glas- in den kautschukelastischen Bereich durch Mikrowellen erfolgt.

15. Werkstoffbahn zum Herstellen einer insbesondere auf Kabelverbindungen und/oder Kabelabzweigungen aufschrumpfbaren Umhüllung in der Ausführungsform einer Peroxid enthaltenden und extrudierten Kunststoffbahn aus einem vernetzbaren Polymer, dadurch gekennzeichnet, daß die Kunststoffbahn aus einem Extrusionsmaterial hergestellt ist, welches aus einer Mischung mit den Hauptkomponenten Polyethylen 0 bis 95 %, bevorzugt 60 bis 80 %, Ethylen-Mischpolymerisaten 0 bis 95 %, bevorzugt 10 bis 20 %, Ethylen-Propylen-Co- oder Terpolymerisaten 0 bis 95 %, bevorzugt 5 bis 20 %, Ruß zu 3 bis 25 %, Stabilisatoren und Flammschutz zu 1 bis 20 %, Peroxid oder Peroxidgemisch zu 0,2 bis 20 % besteht.

16. Werkstoffbahn nach Anspruch 15, dadurch gekennzeichnet, daß das Peroxid ein langsam reagierendes Peroxid, wie z. B. ein Hexamethyl-1,2,3,5-tetraoxacyclononan (HMCN)-Peroxid ist.

17. Werkstoffbahn nach Anspruch 15 oder 16, dadurch gekennzeichnet, daß in die Kunststoffbahn ein hygroskopisches Material mit eingearbeitet ist.

18. Werkstoffbahn nach einem der Ansprüche 15 bis 17, in der Ausführungsform einer nach dem Extrudieren teilvernetzten Kunststoffbahn, dadurch gekennzeichnet, daß die Dichte des Netzwerkes der Teilvernetzung $2 \times 10^{13}/mm^3$ bis $2,5 \times 10^{11}/mm^3$ beträgt.

19. Werkstoffbahn nach einem der Ansprüche 15 bis 18, in der Ausführungsform einer nach dem Extrudieren teilvernetzten und kaltverstreckten Kunststoffbahn, dadurch gekennzeichnet, daß die Dichte des Netzwerkes, welches durch Nachvernetzen der Kunststoffbahn erzielt wird, im Bereich von $2 \times 10^{11}/mm^3$ bis $5 \times 10^{9}/mm^3$ liegt.

**Claims**

1. Method of reducing the susceptibility to tearing of a heat-restorable material web to produce a cover, which is formed from a plastics material web comprising a cross-linkable polymer or polymer mixture and is, more especially, shrinkable onto a cable connection and/or cable branches, according to which method the plastics material web is produced by extrusion, cross-linked, stretched by heating and subsequently cooled in the stretched state, characterised in that the polymer or polymer mixture is extruded at a processing temperature with a specific, stable or temporary cross-linking density characterised by the rubber-elastic modulus, and then the obtained plastics material web is cooled; and in that the plastics material web is subsequently heated whilst generating a temperature, which decreases towards its core or towards the side situated opposite the heat source and is stretched with an orientation extending over the cross-section of the plastics material web at a temperature of the core or of the side situated opposite the heat source below the crystallite melting temperature of partially crystalline polymers or polymer mixtures, or respectively below the glass temperature of amorphous polymers or polymer mixtures.

2. Method according to claim 1, characterised in that the polymer or polymer mixture is of such a high molecular weight that, following extrusion, an adequate number of stable-acting cross-linkings still remain during the shrinking process.

3. Method according to claim 1 or 2, characterised in that the cross-linking density of the polymer or polymer mixture is sufficiently increased prior to its extrusion and/or during the course of its extrusion and/or after its extrusion by means of energy-rich rays and/or chemical means such as peroxides, sulphur compounds, phenolic vulcanisation systems and cross-linking accelerators on their own or mixed with one another or by combining the individual methods with one another.

4. Method according to one of claims 1 to 3, characterised in that the polymer or polymer mixture, having a rubber-elastic modulus within the range of between $10^{-4}$ N/mm$^2$ and 10 N/mm$^2$, is used as a parameter for the cross-linking density.

5. Method according to one of claims 1 to 4, characterised in that the plastics material web is cooled incompletely or completely after its extrusion.

6. Method according to one of claims 1 to 5, characterised in that the extruded plastics material web is heated on one or both sides, in order to generate a temperature which decreases towards the core or towards the side situated opposite the heat source.

7. Method according to one of claims 1 to 6, according to which the plastics material web, comprising a cross-linkable polymer, contains peroxide, characterised in that the plastics material web is extruded at a temperature below the reaction temperature of the peroxide(s); in that the plastics material web is thereafter partially cross-linked and is cold-stretched at a temperature below the crystallite melting points, or respectively in the transitional region from the glass to the rubber-elastic region of the partially cross-linked plastics material web; and in that the plastics material web is subsequently only fully cross-linked in a heat-shrinking process which takes place later.

8. Method according to claim 7, characterised in that a mixture of peroxides, having variable reaction temperatures and variable reaction times, is used.

9. Method according to claim 7, characterised in that a partial cross-linking is effected by rays, or peroxides, and/or silanes.

10. Method according to claim 7, characterised in that the plastics material web is partially cross-linked by peroxide in a salt bath or by steam, the network density, or respectively the degree of the cross-linking with a given quantity of peroxide, being adjustable by the transit time and the temperature.

11. Method according to claim 7, characterised in that the partial cross-linking is accomplished by peroxide utilising a heated calibration with surface lubrication.

12. Method according to claim 7, characterised in that a subsequent cross-linking is effected by peroxide via a microwave heating process and simultaneous surface cooling.

13. Method according to claim 7, characterised in that the partially cross-linked plastics material web is stretched to a stretch dimension in a temperature-controlled liquid such as oil, oil mixtures or the like at a temperature below the crystallite melting point, or respectively in the transitional region from the glass to the rubber-elastic state.

14. Method according to claim 7, characterised in that heating to the stretching temperature of the plastics material web below the melting temperature of the crystalline regions, or respectively into the transitional area from the glass to the rubber-elastic region, Is effected by microwaves.

15. Material web for producing a cover, which is more especially shrinkable onto cable connections and/or cable branches, in the form of an extruded plastics material web which contains peroxide and is formed from a cross-linkable polymer, characterised in that the plastics material web is produced from an extrusion material which comprises a mixture having the main components 0 to 95% polyethylene, preferably 60 to 80%; 0 to 95% ethylene interpolymers, preferably 10 to 20%; 0 to 95% ethylene-propylene co- or terpolymers, preferably 5 to 20%; carbon black at 3 to 25%; stabilisers and flame protection at 1 to 20%; and peroxide or peroxide mixture at 0.2 to 20%.

16. Material web according to claim 15, characterised in that the peroxide is a slow-reacting peroxide, such as, for example, a hexamethyl-1,2,3,5-tetraoxacyclononane (HMCN) peroxide.

17. Material web according to claim 15 or 16, characterised in that a hygroscopic material is incorporated in the plastics material web.

18. Material web according to one of claims 15 to 17, in the form of a plastics material web partially crosslinked after the extrusion process, characterised in that the density of the network of the partial crosslinking amounts to between $2 \times 10^{13}$/mm$^3$ and $2.5 \times 10^{11}$/mm$^3$.

19. Material web according to one of claims 15 to 18, in the form of a plastics material web partially crosslinked and cold-stretched after the extrusion process, characterised in that the density of the network, which is achieved by subsequently crosslinking the plastics material web, lies within the range between $2 \times 10^{11}$/mm$^3$ and $5 \times 10^{9}$/mm$^3$.

## Revendications

1. Procédé de réduction de la tendance à la déchirure d'une bande de matériau thermorétractable pour la fabrication d'une enveloppe posable à chaud, en particulier sur une jonction de câbles et/ou des dérivations de câble, constituée d'une bande de plastique composée de polymère ou d'un mélange de polymères réticulable, la bande de plastique étant produite par extrusion, réticulée, étirée à chaud et enfin refroidie à l'état étiré, caractérisé en ce que le polymère ou le mélange de polymères est extrudé à une température de transformation, avec une densité de réticulation, stable ou temporaire, caractérisée par le module élastique, définie, et en ce que la bande de plastique obtenue est ensuite chauffée avec une température diminuant en direction du coeur ou du côté opposé à celui de la source de chaleur, puis étirée à une température du coeur ou du côté opposé à celui de la source de chaleur, inférieure à la température de fusion des cristallites des polymères ou des mélanges de polymères partiellement cristallins ou inférieure à la température de transition vitreuse du polymère ou du mélange de polymères amorphes, avec une orientation se constituant au-dessus de la section de la bande de plastique.

2. Procédé selon la revendication 1, caractérisé en ce que le polymère ou le mélange de polymères est extrudé avec une masse moléculaire assez élevée pour qu'un nombre suffisant de réticulations agissant encore de manière stable durant le processus de pose à chaud, soit produit.

3. Procédé selon les revendications 1 ou 2, caractérisé en ce que la densité de réticulation du polymère ou du mélange de polymères est suffisamment augmentée avant son extrusion et/ou au cours de cette extrusion et/ou après cette extrusion, à l'aide de rayonnements énergétiques et/ou de moyens chimiques tels que des peroxydes, des composés à base de soufre, des systèmes de vulcanisation phénoliques, des accélérateurs de réticulation, utilisés seuls ou en mélange, ou par couplage des différentes méthodes les unes derrière les autres.

4. Procédé selon l'une des revendications 1 à 3, caractérisé en ce que le polymère ou le mélange de polymères est utilisé avec un module élastique compris dans la plage allant de $10^{-4}$ N/mm2 à 10 N/mm2, en tant que mesure de la densité de réticulation.

5. Procédé selon l'une des revendications 1 à 4, caractérisé en ce que la bande de plastique est refroidie après son extrusion de manière incomplète ou complète.

6. Procédé selon l'une des revendications 1 à 5, caractérisé en ce que le bande de plastique extrudée est chauffée d'un côté ou des deux, de manière à obtenir une température diminuant en direction du noyau ou du côté opposé à celui de la source de chaleur.

7. Procédé selon l'une des revendications 1 à 6, selon lequel la bande de plastique constituée d'un polymère réticulable contient du peroxyde, caractérisé en ce que la bande de plastique est extrudée à une température inférieure à la température de réaction du ou des peroxydes, en ce que la bande est ensuite partiellement réticulée et étirée à froid à une température inférieure aux températures de fusion des cristallites ou à une température comprise dans la zone de transition entre l'état vitreux et l'état caoutchouteux de la bande de plastique partiellement réticulée, et en ce que la réticulation de la bande de plastique s'achève seulement au cours d'un processus de pose à chaud se déroulant ultérieurement.

8. Procédé selon la revendication 7, caractérisé en ce que l'on utilise un mélange de peroxydes présentant différentes températures de réaction et différents temps de réaction.

9. Procédé selon la revendication 7, caractérisé en ce qu'il se produit une réticulation partielle sous l'effet de rayonnements, de peroxydes et/ou de silanes.

10. Procédé selon la revendication 7, caractérisé en ce que la bande de plastique est réticulée partiellement par du peroxyde dans un bain salin ou sous la vapeur, la densité de réticulation ou le degré de la réticulation, pour une quantité donnée de peroxyde, étant ajustable par l'intermédiaire du temps de séjour et de la température.

11. Procédé selon la revendication 7, caractérisé en ce que la réticulation partielle est réalisée par du peroxyde dans le cadre d'un calibrage chauffé avec lubrification superficielle.

12. Procédé selon la revendication 7, caractérisé en ce qu'il se produit une réticulation ultérieure par du peroxyde, par l'intermédiaire d'un chauffage par micro-ondes et d'un refroidissement superficiel simultané.

13. Procédé selon la revendication 7, caractérisé en ce que la bande de plastique partiellement réticulée est étirée à sa mesure d'étirage dans un fluide température modérée, tel que de l'huile, des mélanges d'huiles ou analogues, à une température inférieure à la température de fusion des cristallites ou comprise dans le domaine de transition entre l'état vitreux et l'état caoutchouteux.

14. Procédé selon la revendication 7, caractérisé en ce qu'il se produit un chauffage à une température d'étirage de la bande de plastique, inférieure à la température de fusion des zones cristallines ou comprise dans la zone de transition entre l'état vitreux et l'état caoutchouteux, par des micro-ondes.

15. Bande de plastique pour la production d'une enveloppe posable à chaud, en particulier sur des jonctions de câble et/ou des dérivations de câble, dans le mode de réalisation d'une bande de plastique contenant un peroxyde et extrudée, constituée d'un polymère réticulable, caractérisée en ce que cette bande est produite à partir d'un matériau d'extrusion, lequel est constitué d'un mélange comprenant, comme composants principaux, du polyéthylène, à raison de 0 à 95 %, de préférence de 60 à 80 %, des copolymères d'éthylène, à raison de 0 à 95 %, de préférence de 10 à 20 %, des copolymères ou des terpolymères d'éthylène et de propylène, à raison de 0 à 95 %, de préférence de 5 à 20 %, de la suie, à raison de 3 à 25 %, des agents stabilisants et des agents retardateurs de flammes, à raison de 1 à 20 %, un peroxyde ou un mélange de peroxydes, à raison de 0,2 à 20 %.

16. Bande de plastique selon la revendication 15, caractérisée en ce que le peroxyde est un peroxyde à réaction lente, tel qu'un peroxyde de type hexaméthyl-1,2,3,5-tétraoxacyclononane (HMCN).

17. Bande de plastique selon la revendication 15 ou 16, caractérisée en ce qu'un matériau hygroscopique est intégré dans cette bande.

18. Bande de plastique selon l'une des revendications 15 à 17, dans le mode de réalisation d'une bande de plastique partiellement réticulée après l'extrusion, caractérisée en ce que la densité du réseau de réticulation de la réticulation partielle est de $2 \times 10^{13}/mm^3$ à $2,5 \times 10^{11}/mm^3$.

19. Bande de plastique selon l'une des revendications 15 à 18, dans le mode de réalisation d'une bande de plastique partiellement réticulée après l'extrusion et étirée à froid, caractérisée en ce que la densité du réseau de réticulation, qui est obtenu par une réticultation ultérieure de la bande en plastique, est dans la plage de $2 \times 10^{11}/mm^3$ à $5 \times 10^9/mm^3$.